# EUROPEAN PATENT APPLICATION

(11) **EP 3 572 378 A1**
(43) Date of publication of application: **27.11.2019**
(21) Application number: 19171595.2
(22) Date of filing: 29.04.2019
(51) Int. Cl.: C02F 1/52, C02F 1/72, A01K 63/04, B01J 21/18, B01J 23/83

(54) **CATALYST FILLER FOR PURIFYING WATER IN AQUARIUMS AND PREPARATION METHOD AND USE THEREOF**

(30) Priority: 25.05.2018 CN 201810518000
(71) Applicant: Guangdong Boyu Group Co., Ltd, Raoping County Chaozhou Guangdong 515700 (CN)
(72) Inventor: YU, Youkai, Chaozhou City Guangdong 515700 (CN); YU, Bingyan, Chaozhou City Guangdong 515700 (CN); YU, Jianqin, Chaozhou City Guangdong 515700 (CN)
(74) Representative: Krauns, Christian

(57) **Abstract**

The present disclosure provides a catalyst filler for purifying water in aquariums and a preparation method and a use thereof. The catalyst filler comprises iron element, carbon element, nickel element and rare earth element; in which the contents of each element in the catalyst filler by mass percent are: iron element 30 wt%-70 wt%; carbon element 20 wt%-50 wt%; nickel element 1 wt%-10 wt%; rare earth element 0.1 wt%-2 wt%. The catalyst filler of the present disclosure, in the use environment, can result in generation of hydroxyl groups and dissociation to micro-element ions, which can degrade nitrites, organic amines and organic sulfides in water bodies, and convert phosphoric acid into precipitates. The organic molecules treated by hydroxyl groups are more easily utilized by denitrifying bacteria, thereby increasing efficiency of denitrification-denitrogenation and purifying the water.

## Description

### CROSS-REFERENCE TO RELATED APPLICATIONS

This application claims priority to Chinese Patent Application No. 201810518000.9, filed on May 25, 2018, the contents of which are incorporated herein in its entirety by reference.

### Technical field

The present disclosure belongs to the water purification field, and specifically relates to a catalyst filler for purifying water in aquariums and a preparation method and a use thereof.

### Background

Aquariums are water tanks designed specifically to raise ornamental fishes, corals, aquatic plants and other aquatic organisms. The organisms cultured in the aquariums are mostly used for ornamental purpose, which has strict requirements on the water quality in the aquariums. Meanwhile, the ecosystems in the aquariums are relatively simple, and harmful pollutants such as nitrites, ammonia nitrogen and phosphates produced in the process of raising aquatic organisms are simultaneously removed. The above-mentioned nitrogen and phosphorus-containing pollutants have direct toxic effects on aquatic organisms such as fishes on one hand, and initiates the eutrophication of water on the other hand so that the algae blooms and deplete oxygen in the water. Therefore, supplementary measures are required to remove accumulated pollutants during the use of aquariums for raising aquatic organisms.

At present, the water quality of aquariums is controlled by such a conventional method that the purpose of removing contaminants is achieved by changing water in small amounts for multiple times. However, changing the water needs manpower and time, which shows obvious defects. Aquarium purifiers using filtration principle of activated carbon or ceramics can only remove solid contaminants by physical filtration and cannot remove nitrites, organic amines, organic sulfides and phosphate radicals. While ordinary biological filter beds exhibit lower purification, and it is difficult to adapt to certain cases such as sudden changes in water quality and accumulation of harmful bacteria.

CN 103781730A discloses a device for purifying water in aquariums, comprising an electrochemical flocculation reactor; and the electrochemical flocculation reactor comprises a titanium-based electrode operable to convert ammonia nitrogen, nitrites and/or nitrates to nitrogen gas, and a carbon-based catalyst suitable for generating hydroxyl groups. Although it discloses the addition of a carbon-based catalyst to an aquarium, the carbon-based catalyst matrix employed therein is activated carbon particles, and the carbon-based catalyst needs to be used under electrode driving. The use of the catalyst alone has problems such as slower generation of hydroxyl groups, weaker purification ability, and incomplete purification. At the same time, the device has a complicated structure including the titanium-based electrode with high cost, and has a risk of electricity leakage when used in an aquarium.

### Summary

For the technical problems present in the existing aquarium purification, the present disclosure provides a catalyst filler for purifying water in aquariums and a preparation method and a use thereof. The catalyst filler of the present disclosure, in the use environment, can result in generation of hydroxyl groups and dissociation to micro-element ions through galvanic cell effect, which achieves degradation of nitrites, organic amines and organic sulfides in water bodies, and converts phosphate radicals into precipitates. The organic molecules treated by hydroxyl groups are more easily utilized by denitrifying bacteria, thereby increasing efficiency of denitrification-denitrogenation and purifying the water.

In order to achieve this purpose, the present disclosure adopts the following technical solutions:
In the first aspect, the present disclosure provides a catalyst filler for purifying water in aquariums, comprising iron element, carbon element, nickel element and rare earth element;
wherein the contents of each element in the catalyst filler by mass percent are:

| | |
|---|---|
| iron element | 30 wt%-70 wt%; |
| carbon element | 20 wt%-50 wt%; |
| nickel element | 1 wt%-10 wt%; |
| rare earth element | 0.1 wt%-2 wt%. |

Wherein the content of the iron element can be 30 wt%, 35 wt%, 40 wt%, 45 wt%, 50 wt%, 55 wt%, 60 wt%, 65 wt% or 70 wt% and the like, but not limited to the numerical values listed, and other numerical values in the numerical range not listed above are also applicable; the content of the carbon element can be 20 wt%, 25 wt%, 30 wt%, 35 wt%, 40 wt%, 45 wt% or 50 wt% and the like, but not limited to the numerical values listed, and other numerical values in the numerical range not listed above are also applicable; the content of the nickel element can be 1 wt%, 3 wt%, 5 wt%, 7 wt% or 10 wt% and the like, but not limited to the numerical values listed, and other numerical values in the numerical range not listed above are also applicable; the content of the rare earth element can be 0.1 wt%, 0.3 wt%, 0.5 wt%, 0.7 wt%, 1 wt%, 1.3 wt%, 1.5 wt%, 1.7 wt% or 2 wt% and the like, but not limited to the numerical values listed, and other numerical values in the numerical range not listed above are also applicable.

In the present disclosure, each element in the catalyst filler exists in forms of metal simple substance, alloy or oxide, and the presence forms of each element are advantageous for enhancing the micro-electrolysis. In the present disclosure, the added nickel and rare earth elements can play a role of transmitting electrons to strengthen the micro-electrolysis, however, the amounts of the nickel element and the rare earth element cannot be excessive, and need to be controlled within reasonable ranges. The catalyst will be deactivated as a result of excessive addition of nickel element and exhibit a reduced service life as a result of excessive addition of rare earth element.

The catalyst filler of the present disclosure can achieve good purification effect when used in an aquarium without excitation by additional electrodes. In the use environment, the microelectrolysis current generated by the galvanic cell effect can result in generation of hydroxyl groups and dissociation to micro-element ions, which achieves degradation of nitrites, organic amines and organic sulfides, and converts phosphoric acid into precipitates. The organic molecules treated by hydroxyl groups are more easily utilized by denitrifying bacteria, thereby increasing efficiency of denitrification-denitrogenation.

In the present disclosure, by adding elements such as nickel and rare earths, the ability of the catalyst filler to form a galvanic cell in the special environment of the aquarium is enhanced, and the generation rate of hydroxyl groups is enhanced. Meanwhile, the catalyst filler of the present disclosure discards elements commonly used in the conventional iron-carbon catalyst filler such as copper, zinc and chromium, thereby eliminating the poisoning effect of conventional micro-electrolysis catalyst fillers on aquarium organisms.

The iron and rare earth elements dissolved in the aquarium by the catalyst filler of the present disclosure can be combined with free phosphorus in the aquarium sewage to form precipitates, thereby improving the water quality of the aquarium and reducing the frequency of changing water. When the catalyst filler is used in combination with a biological filter bed, the hydroxyl groups generated by the catalyst filler can promote the macromolecular organics which are difficult to be utilized by the organisms in the water to undergo bond cleavage to become nutrients for the denitrifying bacteria, and at the same time, the effects of reducing organic pollutants in the tank and removing nitro and ammonia nitrogen are achieved.

In the use environment of the catalyst filler of the present disclosure, the iron having a low potential acts as an anode, while the carbon having a high potential acts as a cathode, and an electrochemical reaction occurs with the following reaction principle:
Anode reaction:

   Fe-2e→Fe²⁺

   Fe²⁺+O₂+H₂O→Fe(OH)₃+H⁺
Cathode reaction:

   H+e→H_{ads}

   H_{ads}+O₂→•OH
Removal of pollutants from an aquarium:

   NO₂⁻+•OH→NO₃⁻+H₂O

   PO₄³⁻+Fe(OH)₃→FePO₄↓+H₂O

   COD+•OH→BOD

When the catalyst filler is used in combination with a biological filter bed, the nitrification and denitrification reactions occurring in the biological filter bed are as follows:

NH₃/NH₄⁺+O₂→NO₃⁻

NO₃⁻+BOD→N₂↑+H₂O

The followings are the preferred technical solutions of the present disclosure, but not the limitations to the technical solution provided by the present disclosure, and through the following technical solutions, the technical purposes and beneficial effects of the present disclosure can be better achieved and realized.

As a preferred technical solution of the present disclosure, the contents of each element in the catalyst filler by mass percent are:

| | |
|---|---|
| iron element | 40 wt%-60 wt%; |
| carbon element | 25 wt%-30 wt%; |
| nickel element | 4 wt%-8 wt%; |
| rare earth element | 0.8 wt%-1.3 wt%. |

As a preferred technical solution of the present disclosure, the rare earth element comprises any one selected from the group consisting of Ce, La, Pr, and a combination of at least two selected therefrom, and the typical but non-limiting examples of such combinations are: a combination of Ce and La, a combination of La and Pr, a combination of Ce and Pr, a combination of Ce, La and Pr, and the like, but not limited to the three types of rare earth elements, while the above three types of rare earth elements achieve superior effects.

Preferably, the catalyst filler does not contain elements of copper, zinc and chromium which are harmful to aquatic organisms.

As a preferred technical solution of the present disclosure, the catalyst filler further comprises aluminum element and/or silicon element.

The addition of aluminum element and/or silicon element in the present disclosure can provide support for the catalyst, acting to form pores and prevent catalyst from hardening.

Preferably, the aluminum element is added in an amount of 1 wt%-10 wt% based on the total mass of the catalyst filler, e.g. 1 wt%, 3 wt%, 5wt%, 7 wt% or 10 wt% and the like, but not limited to the numerical values listed, and other numerical values in the numerical range not listed above are also applicable, preferably 2 wt%-5 wt%.
preferably, the silicon element is added in an amount of 1 wt%-10 wt% based on the total mass of the catalyst filler, e.g. 1 wt%, 3 wt%, 5wt%, 7 wt% or 10 wt% and the like, but not limited to the numerical values listed, and other numerical values in the numerical range not listed above are also applicable, preferably 2 wt%-3 wt%.

Preferably, the catalyst filler comprises iron element, carbon element, nickel element, rare earth element, aluminum element and silicon element, and the contents of each element in the catalyst filler by mass percent are:

| | |
|---|---|
| iron element | 40 wt%-60 wt%; |
| carbon element | 25 wt%-30 wt%; |
| nickel element | 4 wt%-8 wt%; |
| aluminum element | 5 wt%∼10 wt%; |
| silicon element | 2 wt%-5 wt%; |
| rare earth element | 0.1 wt%-2 wt%. |

In the second aspect, the present disclosure provides a preparation method of the catalyst filler described above, comprising the following steps:
precursor raw materials are mixed and granulated, calcined under a reducing atmosphere, and then cooled under a reducing atmosphere to obtain the catalyst filler.

As a preferred technical solution of the present disclosure, the precursor raw materials comprise an iron source, a carbon source, a nickel source and a rare earth element source.

Preferably, the iron source comprises any one selected from the group consisting of iron filings, iron powder, iron oxide slag, and a combination of at least two selected therefrom, and the typical but non-limiting examples of such combinations are: a combination of iron filings and iron powder, a combination of iron powder and iron oxide slag, a combination of iron filings and iron oxide slag, a combination of iron filings, iron powder and iron oxide slag, and the like.

Preferably, the carbon source comprises any one selected from the group consisting of carbon powder, cellulose powder, methyl cellulose powder, and a combination of at least two selected therefrom, and the typical but non-limiting examples of such combinations are: a combination of carbon powder and cellulose powder, a combination of cellulose powder and methyl cellulose powder, a combination of carbon powder, cellulose powder and methyl cellulose powder, and the like.

Preferably, the nickel source comprises elemental nickel and/or nickel oxide.

Preferably, the rare earth element source comprises elemental rare earth elements and/or rare earth element oxides.

Preferably, the precursor raw materials further comprise an aluminum source and/or a silicon source.

Preferably, the aluminum source comprises elemental aluminum and/or aluminum oxide.

Preferably, the silicon source comprises elemental silicon and/or silicon oxide.

Preferably, the proportion of each raw material in the precursor raw materials is determined according to the contents of each element in the finally obtained catalyst filler.

In the mixing and granulating operation of the present disclosure, the precursor raw materials are mixed in powder form.

As a preferred technical solution of the present disclosure, the mixing and granulating operation forms any one selected from the group consisting of spherical particles, cylindrical particles, polygonal particles, and a combination of at least two selected therefrom, and the typical but non-limiting examples of such combinations are: a combination of spherical particles and cylindrical particles, a combination of cylindrical particles and polygonal particles, a combination of spherical particles, cylindrical particles and polygonal particles, and the like.

Wherein the "polygonal" refers to a planar figure composed of three or more line segments connected. The polygonal particle described herein means that a certain plane in the particle may be a polygon.

Preferably, the particles formed by the mixing and granulating operation have a maximum diameter of 3 mm-30 mm, e.g. 3mm, 5mm, 10mm, 15mm, 20mm, 25mm or 30mm and the like, but not limited to the numerical values listed, and other numerical values in the numerical range not listed above are also applicable.

Preferably, the temperature for the calcination is 800 °C - 1300 °C; e.g. 800 °C, 900 °C, 1000 °C, 1100 °C, 1200 °C or 1300 °C and the like, but not limited to the numerical values listed, and other numerical values in the numerical range not listed above are also applicable.

Preferably, the reducing atmosphere is hydrogen gas and/or carbon monoxide gas.

Preferably, the cooling is cooling to 100 °C or less, e.g. 90 °C, 80 °C, 70 °C, 60 °C, 50 °C, 40 °C, 30 °C, 20 °C or 10 °C and the like, but not limited to the numerical values listed, and other numerical values in the numerical range not listed above are also applicable.

In the third aspect, the present disclosure provides a use of the catalyst filler described above, in which the catalyst filler is used for purifying water in an aquarium without the need to additionally set electrodes. That is, no additional electrodes are needed to enhance the performances of the catalyst.

Wherein the use of the catalyst filler in the aquarium means that the catalyst is directly immersed in the water body of an aquarium via a container for purifying the water body.

As a preferred technical solution of the present disclosure, the catalyst filler is added to the aquarium in an amount of 3 g-40 g *per* 30 L water, e.g. the amount of the catalyst filler added *per* 30 L water may be 3g, 5g, 7g, 10g, 15g, 20g, 25g, 30g, 35g or 40g and the like, but not limited to the numerical values listed, and other numerical values in the numerical range not listed above are also applicable.

As a preferred technical solution of the present disclosure, the water body treated with the catalyst of the aquarium to which the catalyst filler is added is introduced to a biological filter bed, and returned to the aquarium after being treated by the biological filter bed for cyclic utilization.

The biological filter bed can be conventional biological filter beds in the art, typically but not limited to a biological filter bed consisting of a rotor and/or biochemical cotton, with an aerobic-anaerobic zone.

As compared to the existing technologies, the catalyst filler described by the present disclosure has the following beneficial effects:
(1) The catalyst filler of the present disclosure does not need to be used in conjunction with electrodes in the process of purifying the aquarium, has no risk of electricity leakage, and is convenient to use;
(2) The catalyst filler of the present disclosure, in the use process, can result in generation of hydroxyl groups and dissociation to micro-element ions by micro-electrolysis, which can degrade nitrites, organic amines and organic sulfides and convert phosphoric acid into precipitates. The organic molecules treated by hydroxyl groups are more easily utilized by denitrifying bacteria, thereby increasing efficiency of denitrification-denitrogenation, eliminating accumulated pollutants in the water body, and making the water quality indicators meet the breeding standards of freshwater/seawater fishes and molluscs.

### Detailed Description

In order to better explain the present disclosure and to facilitate understanding of the technical solutions of the present disclosure, the present disclosure will be further described in detail below. However, the following examples are merely simple examples of the present disclosure and are not intended to limit the protection scope of the present disclosure. The protection scope of the present disclosure is defined by the claims.

Detailed description of the present disclosure provides a catalyst filler for purifying water in aquariums and a preparation method and a use thereof, wherein the catalyst filler comprises iron element, carbon element, nickel element and rare earth element;
in which the contents of each element in the catalyst filler by mass percent are:

| | |
|---|---|
| iron element | 30 wt%-70 wt%; |
| carbon element | 20 wt%-50 wt%; |
| nickel element | 1 wt%-10 wt%; |
| rare earth element | 0.1 wt%-2 wt%. |

Its preparation method comprises the following steps:
precursor raw materials are mixed and granulated, calcined under an air-insulated condition, and then cooled under a reducing atmosphere to obtain the catalyst filler.

The catalyst filler is used for purifying water in an aquarium without setting electrodes in the aquarium.

The followings are typical but non-limiting examples of the present disclosure:

### Example 1:

The present example provides a catalyst filler and a preparation method and a use thereof, wherein the catalyst filler comprises iron element, carbon element, nickel element and rare earth element, and the contents of each element are: 60 wt% of iron element, 32 wt% of carbon element, 7 wt% of nickel element, and 1 wt% of rare earth element.

The preparation method of the catalyst filler is:
According to the above contents, iron powder, carbon powder, elemental nickel and oxides of rare earth elements Ce and La were mixed and granulated to form spherical particles having a particle diameter of 25 mm, and the particles were calcined at 1000 °C to 1100 °C under an air-insulated condition, and then cooled under a reducing atmosphere to obtain the catalyst filler.

The prepared catalyst filler was immersed in the water body of an aquarium via a container for purification, and no electrode was arranged in the aquarium. 10 g of catalyst filler was added *per* 30 L of water, and the water body treated by the catalyst was filtered through a biological filter bed and returned to cyclic utilization.

Through the catalyst of the present example combined with a biological filter bed and a circulating water pump installed in an aquarium added with 0.8 g/L of nitrites and 0.08 g/L of phosphates, and a control tank containing only a biological filter bed and a circulating water pump was arranged at the same time, changes in nitrites and phosphates over time were investigated. After testing, it was found that after 5 days, the content of nitrites was decreased to less than 0.3 g/L and the content of phosphates was decreased to less than 0.016 g/L in the aquarium arranged with the catalyst and biological filter bed. At the same time, there was almost no change in the contents of nitrites and phosphates in the control tank.

### Example 2:

The present example provides a catalyst filler and a preparation method and a use thereof, wherein the catalyst filler comprises iron element, carbon element, nickel element and rare earth element, and the contents of each element are: 60 wt% of iron element, 25 wt% of carbon element, 5 wt% of nickel element, 1 wt% of rare earth element, and 5wt% of aluminum element, 4wt% of silicon element.

The preparation method of the catalyst filler is:
According to the above contents, iron powder, carbon powder, nickel oxide, oxides of rare earth elements Ce and Pr, aluminum oxide and silicon oxide were mixed and granulated to form spherical particles having a particle diameter of 10 mm, and the particles were calcined at 1000 °C to 1100 °C under an air-insulated condition, and then cooled under a reducing atmosphere to obtain the catalyst filler.

The prepared catalyst filler was immersed in the water body of an aquarium via a container for purification, and no electrode was arranged in the aquarium. 10 g of catalyst filler was added per 30 L of water, and the water body treated by the catalyst was filtered through a biological filter bed and returned to cyclic utilization.

Through the catalyst of the present example combined with a biological filter bed and a circulating water pump installed in an aquarium added with 0.8 g/L of nitrites and 0.08 g/L of phosphates, and a control tank containing only a biological filter bed and a circulating water pump was arranged at the same time, changes in nitrites and phosphates over time were investigated. After testing, it was found that after 3 days, the content of nitrites was decreased to less than 0.3 g/L and the content of phosphates was decreased to less than 0.016 g/L in the aquarium arranged with the catalyst and biological filter bed. At the same time, there was almost no change in the contents of nitrites and phosphates in the control tank.

### Example 3:

The present example provides a catalyst filler and a preparation method and a use thereof, wherein the catalyst filler comprises iron element, carbon element, nickel element and rare earth element, and the contents of each element are: 50 wt% of iron element, 35 wt% of carbon element, 4 wt% of nickel element, 2 wt% of rare earth element, 6 wt% of aluminum element, 2 wt% of silicon element.

The preparation method of the catalyst filler is:
According to the above contents, iron powder, carbon powder, elemental nickel, oxides of rare earth elements Ce, La and Pr, aluminum oxide and silicon oxide were mixed and granulated to form cylindrical particles having a particle diameter of 15 mm, and the particles were calcined at 850 °C to 900 °C under an air-insulated condition, and then cooled under a reducing atmosphere to obtain the catalyst filler.

The prepared catalyst filler was immersed in the water body of an aquarium via a container for purification, and no electrode was arranged in the aquarium. 20g of catalyst filler was added per 30 L of water, and the water body treated by the catalyst was filtered through a biological filter bed and returned to cyclic utilization.

The catalyst described in the present example was used to purify the water in the aquarium, and the purification mode and the setting of the control group were referred to Example 1. After testing, it was found that after 4 days, the content of nitrites was decreased to less than 0.3 g/L and the content of phosphates was decreased to less than 0.016 g/L in the aquarium arranged with the catalyst and biological filter bed. At the same time, there was almost no change in the contents of nitrites and phosphates in the control tank.

### Example 4:

The present example provides a catalyst filler and a preparation method and a use thereof, wherein the catalyst filler comprises iron element, carbon element, nickel element and rare earth element, and the contents of each element are: 40 wt% of iron element, 45 wt% of carbon element, 8 wt% of nickel element, 0.5 wt% of rare earth element, 2 wt% of aluminum element, 4.5 wt% of silicon element.

The preparation method of the catalyst filler is:
According to the above contents, iron powder, carbon powder, elemental nickel, oxides of rare earth elements Ce, La and Pr, aluminum oxide and silicon oxide were mixed and granulated to form polygonal particles having a particle diameter of 15 mm, and the particles were calcined at 1200 °C to 1300 °C under an air-insulated condition, and then cooled under a reducing atmosphere to obtain the catalyst filler.

The prepared catalyst filler was immersed in the water body of an aquarium via a container for purification, and no electrode was arranged in the aquarium. 30g of catalyst filler was added per 30 L of water, and the water body treated by the catalyst was filtered through a biological filter bed and returned to cyclic utilization.

The catalyst described in the present example was used to purify the water in the aquarium, and the purification mode and the setting of the control group were referred to Example 1. After testing, it was found that after 4 days, the content of nitrites was decreased to less than 0.3 g/L and the content of phosphates was decreased to less than 0.016 g/L in the aquarium arranged with the catalyst and biological filter bed. At the same time, there was almost no change in the contents of nitrites and phosphates in the control tank.

### Comparison Example 1:

The present comparison example provides a catalyst filler and a preparation method and a use thereof. The catalyst filler has the same composition as that in Example 1 except that it does not comprise iron element.

The preparation and application of the catalyst filler were referred to Example 1.

Since iron element was not added in the catalyst filler of the present comparison example, it cannot constitute a galvanic cell structure required for micro-electrolysis in water, and thus the effect of purifying the water body cannot be achieved. Through the catalyst of the present comparison example combined with a biological filter bed and a circulating water pump installed in an aquarium added with 0.8 g/L of nitrites and 0.08 g/L of phosphates, changes in nitrites and phosphates over time were investigated. After testing, it was found that after 10 days, there was almost no change in the contents of nitrites and phosphates in the aquarium.

### Comparison Example 2:

The present comparison example provides a catalyst filler and a preparation method and a use thereof, The catalyst filler has the same composition as that in Example 1 except that it does not comprise nickel element.

The preparation and application of the catalyst filler were referred to Example 1.

The catalyst filler of the present comparison example had lowered micro-electrolysis efficiency due to no addition of nickel element. Through the catalyst of the present comparison example combined with a biological filter bed and a circulating water pump installed in an aquarium added with 0.8 g/L of nitrites and 0.08 g/L of phosphates, changes in nitrites and phosphates over time were investigated. After testing, it was found that after 10-15 days, the content of nitrites was decreased to less than 0.3 g/L and the content of phosphates was decreased to less than 0.016 g/L in the aquarium.

### Comparison Example 3:

The present comparison example provides a catalyst filler and a preparation method and a use thereof, The catalyst filler has the same composition as that in Example 1 except that it does not comprise rare earth elements.

The preparation and application of the catalyst filler were referred to Example 1.

The catalyst filler of the present comparison example had lowered micro-electrolysis efficiency due to no addition of rare earth elements. Through the catalyst of the present comparison example combined with a biological filter bed and a circulating water pump installed in an aquarium added with 0.8 g/L of nitrites and 0.08 g/L of phosphates, changes in nitrites and phosphates over time were investigated. After testing, it was found that after 10-15 days, the content of nitrites was decreased to less than 0.3 g/L and the content of phosphates was decreased to less than 0.05g/L in the aquarium.

As can be seen from the above examples and comparison examples, the catalyst filler of the present disclosure does not need to be used in conjunction with electrodes in the process of purifying the aquarium, has no risk of electricity leakage, and is convenient to use; moreover, the catalyst filler of the present disclosure, in the use process, can result in generation of hydroxyl groups and dissociation to micro-element ions by micro-electrolysis, which can degrade nitrites, organic amines and organic sulfides and convert phosphoric acid into precipitates. The organic molecules treated by hydroxyl groups are more easily utilized by denitrifying bacteria, thereby increasing efficiency of denitrification-denitrogenation, making the concentration of accumulated pollutants in the water body down to a range suitable for aquaculture organisms.

The applicant declares that the present disclosure discloses the process via the aforesaid examples. However, the present disclosure is not limited by the aforesaid process steps. That is to say, it does not mean that the present disclosure cannot be carried out unless the aforesaid process steps are carried out. Those skilled in the art shall know that any improvement, equivalent replacement of the parts of the present disclosure, addition of auxiliary parts, selection of specific modes and the like all fall within the protection scope and disclosure scope of the present disclosure.

## Claims

1. A catalyst filler for purifying water in aquariums, in which the catalyst filler comprises iron element, carbon element, nickel element and rare earth element;
wherein the contents of each element in the catalyst filler by mass percent are:
| | |
|---|---|
| iron element | 30 wt%-70 wt%; |
| carbon element | 20 wt%-50 wt%; |
| nickel element | 1 wt%-10 wt%; |
| rare earth element | 0.1 wt%-2 wt%. |

2. The catalyst filler according to claim 1, in which the contents of each element in the catalyst filler by mass percent are:
| | |
|---|---|
| iron element | 40 wt%-60 wt%; |
| carbon element | 25 wt%-30 wt%; |
| nickel element | 4 wt%-8 wt%; |
| rare earth element | 0.8 wt%-1.3 wt%. |

3. The catalyst filler according to claim 1 or 2, in which the rare earth element comprises any one selected from the group consisting of Ce, La, Pr, and a combination of at least two selected therefrom;
preferably, the catalyst filler does not contain elements of copper, zinc and chromium which are harmful to aquatic organisms.

4. The catalyst filler according to any of claims 1-3, in which the catalyst filler further comprises aluminum element and/or silicon element;
preferably, the aluminum element is added in an amount of 1 wt%-10 wt%, preferably 2 wt%-5 wt%, based on the total mass of the catalyst filler;
preferably, the silicon element is added in an amount of 1 wt%-10 wt%, preferably 2 wt%-3 wt%, based on the total mass of the catalyst filler;
preferably, the catalyst filler comprises iron element, carbon element, nickel element, rare earth element, aluminum element and silicon element, and the contents of each element in the catalyst filler by mass percent are:
| | |
|---|---|
| iron element | 40 wt%-60 wt%; |
| carbon element | 25 wt%-30 wt%; |
| nickel element | 4 wt%-8 wt%; |
| aluminum element | 5 wt%-10 wt%; |
| silicon element | 2 wt%-5 wt%; |
| rare earth element | 0.1 wt%-2 wt%. |

5. A preparation method of the catalyst filler according to any of claims 1-4, in which the method comprises the following steps:
precursor raw materials are mixed and granulated, calcined under a reducing atmosphere, and then cooled under a reducing atmosphere to obtain the catalyst filler.

6. The preparation method according to claim 5, in which the precursor raw materials comprise an iron source, a carbon source, a nickel source and a rare earth element source;
preferably, the iron source comprises any one selected from the group consisting of iron filings, iron powder, iron oxide slag, and a combination of at least two selected therefrom;
preferably, the carbon source comprises any one selected from the group consisting of carbon powder, cellulose powder, methyl cellulose powder, and a combination of at least two selected therefrom;
preferably, the nickel source comprises elemental nickel and/or nickel oxide; preferably, the rare earth element source comprises elemental rare earth element and/or rare earth element oxides;
preferably, the precursor raw materials further comprise an aluminum source and/or a silicon source;
preferably, the aluminum source comprises elemental aluminum and/or aluminum oxide;
preferably, the silicon source comprises elemental silicon and/or silicon oxide;
preferably, the proportion of each raw material in the precursor raw materials is determined according to the contents of each element in the finally obtained catalyst filler.

7. The preparation method according to claim 5 or 6, in which the mixing and granulating operation forms any one selected from the group consisting of spherical particles, cylindrical particles, polygonal particles, and a combination of at least two selected therefrom;
preferably, the particles formed by the mixing and granulating operation have a maximum diameter of 30 mm;
preferably, the temperature for the calcination is 800 °C - 1300 °C;
preferably, the reducing atmosphere is hydrogen gas and/or carbon monoxide gas;
preferably, the cooling is cooling to 100 °C or less.

8. A use of the catalyst filler according to any one of claims 1 to 4, in which the catalyst filler is used for purifying water in an aquarium without the need to additionally set electrodes or an externally-applied electric field.

9. The use according to claim 8, in which the catalyst filler is added to the aquarium in an amount of 3 g-40 g *per* 30 L water.

10. The use according to claim 8 or 9, in which the water body treated with the catalyst of the aquarium to which the catalyst filler is added is introduced to a biological filter bed, and returned to the aquarium after being treated by the biological filter bed for cyclic utilization.
